# EUROPÄISCHE PATENTSCHRIFT

(11) **EP 2 877 359 B1**
(45) Veröffentlichungstag und Bekanntmachung des Hinweises auf die Patenterteilung: **06.04.2016**
(21) Anmeldenummer: 13737543.2
(22) Anmeldetag: 17.07.2013
(51) Int. Cl.: B60K 15/035

(54) **KRAFTSTOFFTANKANORDNUNG FÜR EIN KRAFTFAHRZEUG, ENTSPRECHENDES KRAFTFAHRZEUG SOWIE VERFAHREN ZUM BETREIBEN EINER KRAFTSTOFFTANKANORDNUNG**
FUEL TANK ARRANGEMENT FOR A MOTOR VEHICLE, CORRESPONDING MOTOR VEHICLE AND METHOD FOR OPERATING A FUEL TANK ARRANGEMENT
ENSEMBLE DE RÉSERVOIR À CARBURANT POUR VÉHICULE AUTOMOBILE, VÉHICULE AUTOMOBILE CORRESPONDANT AINSI QUE PROCÉDÉ POUR FAIRE FONCTIONNER UN ENSEMBLE DE RÉSERVOIR À CARBURANT

(30) Priorität: 24.07.2012 DE 102012014612
(43) Veröffentlichungstag der Anmeldung: 03.06.2015
(73) Patentinhaber: Audi AG, 85045 Ingolstadt (DE)
(72) Erfinder: HAGEN, Harald, 95473 Creussen (DE); KUGLER, Clemens, 91723 Dittenheim (DE)
(74) Vertreter: Patzelt, Heike Anna Maria
(86) Internationale Anmeldenummer: PCT/EP2013/002113
(87) Internationale Veröffentlichungsnummer: WO 2014/015961

(56) Entgegenhaltungen:
- EP-A2- 1 297 984
- DE-A1-102007 036 112
- GB-A- 2 334 026
- US-A- 5 816 287

## Beschreibung

Die Erfindung betrifft eine Kraftstofftankanordnung für ein Kraftfahrzeug, mit einem Kraftstofftank, mit einer an den Kraftstofftank angeschlossenen Einfüllleitung und mit einer Kraftstofftankentlüftungseinrichtung, die eine an den Kraftstofftank angeschlossene Tankentlüftungsleitung mit einem Tankentlüftungsventil aufweist. Die Erfindung betrifft weiterhin ein Kraftfahrzeug sowie ein Verfahren zum Betreiben einer Kraftstofftankanordnung.

Kraftstofftankanordnungen der eingangs genannten Art sind aus dem Stand der Technik bekannt. Sie umfassen den Kraftstofftank, welcher dem Bereitstellen beziehungsweise Zwischenspeichern von Kraftstoff für eine Brennkraftmaschine des Kraftfahrzeugs dient. Der Kraftstofftank ist also beispielsweise über eine Kraftstoffleitung an die Brennkraftmaschine angeschlossen. Zum Einfüllen von Kraftstoff in den Kraftstofftank, insbesondere durch einen Fahrer des Kraftfahrzeugs, dient die Einfüllleitung, die beispielsweise einen Einfüllstutzen aufweist oder als solcher ausgebildet ist. Bei modernen Kraftfahrzeugen liegt der Kraftstofftank häufig als Drucktank vor, weist also zumindest während eines Betriebs des Kraftfahrzeugs einen Druck auf, welcher von dem Umgebungsdruck abweicht, ihn also entweder übersteigt oder geringer ist. Entsprechend muss der Kraftstofftank während des Betriebs der Brennkraftmaschine druckdicht beziehungsweise hermetisch dicht und druckfest sein.

Gleichzeitig muss jedoch das Betanken des Kraftstofftanks beziehungsweise das Einfüllen des Kraftstoffs in diesen durch die Einfüllleitung möglich sein. Die Einfüllleitung weist eine Aufnahme beispielsweise für eine Zapfpistole oder dergleichen auf. Während des Betankens beziehungsweise Einfüllens liegt üblicherweise eine Strömungsverbindung zwischen dem Kraftstofftank und einer Außenumgebung der Kraftstofftankanordnung beziehungsweise des Kraftfahrzeugs vor. Daher muss der Kraftstofftank vor dem Einfüllen des Kraftstoffs durch die Einfüllleitung beziehungsweise bereits vor dem Freigeben der Einfüllleitung gezielt entlüftet werden, um eine häufig mit dem Austreten von Kraftstoff einhergehende stoßartige Entlüftung zu vermeiden. Zu diesem Zweck ist die Kraftstofftankentlüftungseinrichtung vorgesehen. Diese verfügt über die Tankentlüftungsleitung, welche strömungstechnisch an den Kraftstofftank angeschlossen ist. In der Tankentlüftungsleitung ist das Tankentlüftungsventil vorgesehen, mittels welchem eine Strömungsverbindung zwischen dem Kraftstofftank und der Außenumgebung versperrt oder zum Entlüften des Kraftstofftanks freigegeben werden kann. In der Strömungsverbindung zwischen dem Kraftstofftank und der Außenumgebung liegt üblicherweise eine Filtereinrichtung vor, welche beispielsweise über einen Aktivkohlefilter verfügt. Diese Filtereinrichtung dient dem Ausfiltern von Kraftstoffbestandteilen beziehungsweise Kohlenwasserstoffen aus dem aus dem Kraftstofftank bei dessen Entlüften ausströmenden Kraftstoff-Luft-Gemisch.

Vor dem Einfüllen des Kraftstoffs muss der Fahrer des Kraftfahrzeugs zunächst anzeigen, dass er Kraftstoff in den Kraftstofftank einfüllen möchte. Geschieht dies, wird das Entlüften des Kraftstofftanks sowie der Einfüllleitung vorgenommen. Erst wenn der in dem Kraftstofftank und/oder der Einfüllleitung vorliegende Tankinnendruck einen bestimmten Solldruck, beispielsweise 25 mbar, unterschritten hat, wird die Einfüllleitung, zum Einfüllen des Kraftstoffs freigegeben. Dies geschieht insbesondere durch Freigeben einer Tankklappe, welche einen die Einfüllleitung verschließenden Tankdeckel abdeckt. Alternativ oder zusätzlich kann ein Freigeben des Tankdeckels vorgesehen sein. Bei freigegebener Tankklappe kann diese aus einer Geschlossenstellung in eine Offenstellung gebracht werden und nachfolgend der Tankdeckel von der Einfüllleitung entfernt werden. Nach dem Anzeigen, dass ein Einfüllen vorgenommen werden soll, muss der Fahrer also zunächst abwarten, bis die Tankklappe freigegeben wird. Anschließend kann er diese und den Tankdeckel zum Freigeben der Einfüllleitung betätigen. Erst nachfolgend kann er das Einfüllen des Kraftstofftanks, beispielsweise durch Einführen und Betätigen der Zapfpistole, vornehmen. Dies ist ein zeitaufwendiger Vorgang, bei welchem zudem von der bei drucklosen Kraftstofftanks üblichen Vorgehensweise abgewichen wird. Dies kann zu Irritationen führen.

Eine Kraftstofftankanordnung nach dem Oberbegriff der Patentanspruchs 1 ist ferner aus der Druckschrift EP 1 297 984 A2 bekannt.

Es ist daher Aufgabe der Erfindung, eine Kraftstofftankanordnung vorzustellen, welche diesen Nachteil nicht aufweist, sondern insbesondere einen schnelleren Zugriff auf die Einfüllleitung zum Einfüllen von Kraftstoff in den Kraftstofftank ermöglicht.

Dies wird erfindungsgemäß mit der Kraftstofftankanordnung mit den Merkmalen des Anspruchs 1 erreicht. Dabei ist vorgesehen, dass die Kraftstofftankentlüftungseinrichtung sowohl zur unabhängigen als auch zur gleichzeitigen Entlüftung des Kraftstofftanks und der Einfüllleitung vorgesehen ist. Die Kraftstofftankentlüftungseinrichtung dient also nicht lediglich der Entlüftung des Kraftstofftanks, sondern auch der Entlüftung der Einfüllleitung. Dies wurde vorstehend bereits angedeutet. Bislang erfolgte jedoch stets ein gleichzeitiges Entlüften des Kraftstofftanks und der Einfüllleitung, weil diese üblicherweise strömungstechnisch aneinander angeschlossen sind. Die Möglichkeit zum gleichzeitigen Entlüften von Kraftstofftank und Einfüllleitung soll weiterhin gegeben sein. Zusätzlich soll jedoch nun das getrennte beziehungsweise unabhängige Entlüften vorgenommen werden können. Insbesondere soll das Entlüften der Einfüllleitung möglich sein, während der Kraftstofftank nicht entlüftet wird, also die Strömungsverbindung zwischen ihm und der Außenumgebung unterbrochen ist.

Auf diese Weise wird dem Fahrer des Kraftfahrzeugs ein schnellerer Zugriff auf die Einfüllleitung ermöglicht, weil beispielsweise die Tankklappe bereits bei vollständiger oder wenigstens teilweiser Entlüftung der Einfüllleitung freigegeben werden kann, auch wenn der Kraftstofftank noch einen Tankinnendruck aufweist, der den gewünschten Solldruck übersteigt. Insbesondere kann es vorgesehen sein, dass das Entlüften der Einfüllleitung erst zu Beginn eines Öffnens beziehungsweise einem Entriegeln der Tankklappe eingeleitet wird. Dabei erfolgt das Entlüften jedoch derart, dass es bereits vollständig abgeschlossen ist, bis die Tankklappe und der Tankdeckel zum Freigeben der Einfüllleitung durch den Fahrer betätigt beziehungsweise geöffnet worden sind. Bis der eigentliche Tankvorgang, also das Einfüllen des Kraftstoffs in den Kraftstofftank durch die Einfüllleitung, beginnt, wird das Entlüften des Kraftstofftanks beendet. Dieses Entlüften erfolgt jedoch wenigstens teilweise parallel zu den Handgriffen, die der Fahrer zum Einfüllen des Kraftstoffs vornehmen muss, anstelle von hintereinander, wie dies bislang der Fall ist. Entsprechend kann der Fahrer die von Fahrzeugen mit drucklosem Kraftstofftank bekannte Vorgehensweise zum Einfüllen des Kraftstoffs anwenden.

Eine vorteilhafte Weiterbildung der Erfindung sieht vor, dass die Einfüllleitung über wenigstens ein Ventil, insbesondere ein Mehrwegeventil, sowohl stromaufwärts als auch stromabwärts des Tankentlüftungsventils strömungstechnisch mit der Tankentlüftungsleitung verbindbar ist. Die Tankentlüftungsleitung ist, wie bereits vorstehend ausgeführt, einerseits an den Kraftstofftank und andererseits, beispielsweise über die Filtereinrichtung, an die Außenumgebung angeschlossen. Die Strömungsverbindung zwischen dem Kraftstofftank und der Außenumgebung ist nur mittels des Tankentlüftungsventils einstellbar beziehungsweise herstellbar. Um das unabhängige beziehungsweise getrennte Entlüften der Einfüllleitung zu ermöglichen, ist die Einfüllleitung an eine Stelle der Tankentlüftungsleitung angeschlossen, die stromabwärts des Tankentlüftungsventils vorliegt. Entsprechend kann durch entsprechendes Einstellen Ventils beziehungsweise des Mehrwegeventils das Tankentlüftungsventil umgangen werden. Bei dieser Einstellung liegen somit das Ventil und das Tankentlüftungsventil parallel zueinander vor.

Wird während dieser Einstellung des Ventils das Tankentlüftungsventil geöffnet, so ist auch das gleichzeitige Entlüften von Kraftstofftank und Einfüllleitung möglich. Andererseits ist die Einfüllleitung über ein weiteres Ventil oder über das Mehrwegeventil auch an eine Stelle der Tankentlüftungsleitung angeschlossen, die stromaufwärts des Tankentlüftungsventils liegt. Bei dieser Einstellung liegen das weitere Ventil beziehungsweise das Mehrwegeventil und das Tankentlüftungsventil in strömungstechnischer Hinsicht hintereinander geschaltet vor. Mithin kann die Einfüllleitung nur dann entlüftet werden, wenn das Tankentlüftungsventil die Strömungsverbindung zwischen dem Kraftstofftank und der Außenumgebung freigibt, sodass eine gleichzeitige Entlüftung von Kraftstofftank und Einfüllleitung durchgeführt wird. Mithilfe der Ventile beziehungsweise des Mehrwegeventils kann also eingestellt werden, ob eine Strömungsverbindung zwischen der Einfüllleitung und der Außenumgebung über das Tankentlüftungsventil verläuft, also mit diesem einstellbar ist, oder ob die Strömungsverbindung um das Tankentlüftungsventil zu dessen Umgehung herumgeführt ist. Sind mehrere Ventile vorgesehen, so können diese gemeinsam von einer einzigen Stelleinrichtung betätigbar sein. Das Mehrwegeventil liegt beispielsweise als 3/2-Wegeventil vor.

Eine Weiterbildung der Erfindung sieht vor, dass in einer ersten Verbindungsleitung, die an das Ventil, insbesondere Mehrwegeventil, angeschlossen ist und stromaufwärts des Tankentlüftungsventils in die Tankentlüftungsleitung einmündet, ein Drosselelement vorgesehen ist. Über die erste Verbindungsleitung wird also die Strömungsverbindung zwischen dem Ventil und der stromaufwärts des Tankentlüftungsventils gelegenen Stelle der Tankentlüftungsleitung hergestellt. In dieser Leitung soll das Drosselelement vorliegen, welches gegenüber der ersten Verbindungsleitung einen verringerten Durchströmungsquerschnitt aufweist. Auf diese Weise wird erreicht, dass das gleichzeitige Entlüften von Kraftstofftank und Einfüllleitung hauptsächlich durch den Kraftstofftank erfolgt, dass also das in der Einführleitung vorliegende Kraftstoff-Luft-Gemisch zunächst in den Kraftstofftank und anschließend durch die Tankentlüftungsleitung strömt.

Zusätzlich oder alternativ kann vorgesehen sein, dass in einer zweiten Verbindungsleitung, die an das Ventil, insbesondere das Mehrwegeventil, angeschlossen ist und stromabwärts des Tankentlüftungsventils mit der Tankentlüftungsleitung zusammengeführt ist, insbesondere in diese einmündet, ein Rückschlagventil vorgesehen ist, das nur eine von dem Ventil fort gerichtete Strömung zulässt. Über die zweite Verbindungsleitung ist also das Umgehen beziehungsweise Überbrücken des Tankentlüftungsventils vorgesehen. Mithilfe der zweiten Verbindungsleitung kann in der Einfüllleitung vorliegendes Kraftstoff-Luft-Gemisch unmittelbar, also nicht über das Tankentlüftungsventil, der Außenumgebung zugeführt werden, beispielsweise über die Filtereinrichtung. Die zweite Verbindungsleitung ist mit ihrer einen Seite an das Ventil angeschlossen. Auf ihrer anderen Seite ist sie mit der Tankentlüftungsleitung zusammengeführt. Das bedeutet, dass die Tankentlüftungsleitung und die zweite Verbindungsleitung beispielsweise über ihre jeweilige Erstreckung strömungstechnisch voneinander getrennt sind, jedoch in der Außenumgebung oder bereits in der Filtereinrichtung zusammengeführt sind. Um kurze Leitungslängen und mithin geringen Bauraum zu erzielen, mündet die zweite Verbindungsleitung jedoch bevorzugt in die Tankentlüftungsleitung ein. Dies ist an der stromabwärts des Tankentlüftungsventils liegenden Stelle vorgesehen. Um ein Rückströmen von Luft beziehungsweise Kraftstoff-Luft-Gemisch in die Einfüllleitung zu vermeiden, liegt in der zweiten Verbindungsleitung das Rückschlagventil vor. Dieses lässt lediglich eine Strömung zu, die aus der Einfüllleitung herausgerichtet ist, also ausgehend von der Einfüllleitung beziehungsweise dem Ventil durch die zweite Verbindungsleitung in Richtung der Außenumgebung verläuft.

Mit Vorteil kann vorgesehen sein, dass die Tankentlüftungsleitung stromabwärts des Tankentlüftungsventils in eine Filtereinrichtung, insbesondere eine Aktivkohlefiltereinrichtung einmündet. Auf diese Weise kann aus dem Kraftstofftank beziehungsweise der Einfüllleitung austretendes Kraftstoff-Luft-Gemisch von dem Kraftstoffanteil beziehungsweise den enthaltenen Kohlenwasserstoffen befreit werden, sodass nur der Luftanteil in die Außenumgebung gelangt, zumindest solange die Speicherkapazität der Filtereinrichtung nicht erschöpft ist. Diese Ausführungsform ist besonders vorteilhaft, wenn die zweite Verbindungsleitung stromaufwärts der Filtereinrichtung in die Tankentlüftungsleitung einmündet. Alternativ kann neben der Tankentlüftungsleitung auch die zweite Verbindungsleitung, welche in diesem Fall separat von der Tankentlüftungsleitung vorliegt, in die Filtereinrichtung einmünden. Die Filtereinrichtung liegt bevorzugt als Aktivkohlefiltereinrichtung vor, weist also zumindest einen Aktivkohlefilter auf.

Eine weitere Ausgestaltung der Erfindung sieht vor, dass strömungstechnisch zwischen dem Kraftstofftank und der Einfüllleitung, insbesondere an einer Mündungsstelle der Einfüllleitung in den Kraftstofftank, ein Sperrventil vorgesehen ist. Das Sperrventil dient dem Unterbrechen beziehungsweise Freigeben der Strömungsverbindung zwischen dem Kraftstofftank und wenigstens einem Bereich der Einfüllleitung, nämlich dem einer Einfüllöffnung zugewandten Seite der Einfüllleitung, durch welche das Einfüllen des Kraftstoffs in den Kraftstofftank vorgenommen wird. Besonders bevorzugt ist die gesamte Einfüllleitung mittels des Sperrventils strömungstechnisch von dem Kraftstofftank trennbar. Zu diesem Zweck kann das Sperrventil an der Mündungsstelle vorgesehen sein, an welcher die Einfüllleitung in den Kraftstofftank einmündet. Das Sperrventil ermöglicht das Entlüften der Einfüllleitung völlig unabhängig von dem Kraftstofftank. Bei dem Entlüften der Einfüllleitung kann also in dem Kraftstofftank vorliegendes Kraftstoff-Luft-Gemisch nicht in die Einfüllleitung und über diese in Richtung der Außenumgebung gelangen. Vielmehr wird es möglich, die Einführleitung vollständig zu entlüften, bevor das Entlüften des Kraftstofftanks eingeleitet wird. Das Sperrventil ist beispielsweise als Rückschlagventil ausgebildet, kann jedoch auch als elektronisch oder mechanisch geschaltetes Stellventil vorliegen.

Schließlich kann vorgesehen sein, dass die Einfüllleitung auf ihrer dem Kraftstofftank abgewandten Seite mit einem Tankdeckel verschließbar ist, der einen Drehverschluss aufweist, der eine Freigabe der Einführleitung nur bei einer Drehbewegung des Tankdeckels um mehr als 360° zulässt. Bei Anordnung des Tankdeckels an der Einfüllleitung beziehungsweise über der Einfüllöffnung ist die Einfüllleitung hermetisch gegenüber der Außenumgebung abgedichtet. Auch bei einer hohen Druckdifferenz zwischen dem Tankinnendruck und dem Außendruck in der Außenumgebung kann kein Kraftstoff-Luft-Gemisch an dem Tankdeckel vorbei durch die Einfüllleitung in die Außenumgebung gelangen. Bevor Kraftstoff durch die Einfüllleitung in den Kraftstofftank eingefüllt werden kann, muss mithin die Einfüllleitung durch den Tankdeckel freigegeben sein.

Zu diesem Zweck ist üblicherweise ein Entfernen des Tankdeckels durch die Drehbewegung vorgesehen. Um den Zeitraum zu verlängern, welcher zum Entlüften des Kraftstofftanks und/oder der Einfüllleitung zur Verfügung steht, ist der Drehverschluss des Tankdeckels, mit welcher dieser an der Einfüllleitung befestigt beziehungsweise befestigbar ist, derart ausgeführt, dass eine Drehbewegung um mehr als 360° durchgeführt werden muss, damit der Tankdeckel die Einfüllleitung freigibt beziehungsweise von dieser abgenommen werden kann. Der Drehverschluss besteht insoweit zumeist aus einem ersten Gewinde des Tankdeckels und einem zweiten Gewinde der Einfüllleitung beziehungsweise eines an der Einfüllleitung vorgesehenen Einfüllstutzens, wobei die Gewinde ein Aufschrauben beziehungsweise Einschrauben des Tankdeckels an beziehungsweise in die Einfüllleitung ermöglichen. Die zum Freigeben der Einfüllleitung notwendige Drehbewegung muss vorzugsweise über mindestens 360°, besonders bevorzugt um mehr als 360°, beispielsweise um mehr als 540° oder mehr als 720°, durchgeführt werden.

Die Erfindung betrifft weiterhin ein Kraftfahrzeug, dass eine Kraftstofftankanordnung gemäß den vorstehenden Ausführungen aufweist. Das Kraftfahrzeug verfügt bevorzugt über eine Brennkraftmaschine, welche mit Kraftstoff aus dem Kraftstofftank zu ihrem Betrieb versorgt wird. Die Brennkraftmaschine ist dabei beispielsweise Bestandteil einer Hybridantriebseinrichtung, welche neben der wenigstens einen Brennkraftmaschine als erstes Antriebsaggregat über zumindest ein weiteres Antriebsaggregat, beispielsweise eine elektrische Maschine, verfügt. In diesem Fall dient die Brennkraftmaschine beispielsweise als Range-Extender oder ist dazu vorgesehen, ein auf das Antreiben des Kraftfahrzeugs gerichtetes Drehmoment wenigstens zeitweise gemeinsam mit dem weiteren Antriebsaggregat zur Verfügung zu stellen. Entsprechend kann also zumindest zeitweise eine Drehmomentkopplung zwischen der Brennkraftmaschine und dem weiteren Antriebsaggregat vorliegen.

Die Erfindung betrifft weiterhin ein Verfahren zum Betreiben einer Kraftstofftankanordnung für ein Kraftfahrzeug, insbesondere gemäß den vorstehenden Ausführungen, wobei die Kraftstofftankanordnung über einen Kraftstofftank, eine an den Kraftstofftank angeschlossene Einfüllleitung und eine Kraftstofftankentlüftungseinrichtung verfügt, die eine an den Kraftstofftank angeschlossene Tankentlüftungsleitung mit einem Tankentlüftungsventil aufweist. Dabei ist vorgesehen, dass die Kraftstofftankentlüftungseinrichtung sowohl zur unabhängigen als auch zur gleichzeitigen Entlüftung des Kraftstofftanks und der Einfüllleitung verwendet wird. Auf die Vorteile einer derartigen Vorgehensweise wurde bereits eingegangen. Die Kraftstofftankanordnung sowie das Verfahren zu deren Betreiben können gemäß den vorstehenden Ausführungen weitergebildet sein, sodass insoweit auf diese verwiesen wird.

Bei der Durchführung des Verfahrens kann es vorgesehen sein, dass vor einem Befüllen des Kraftstofftanks durch die Einfüllleitung, insbesondere nach einem Öffnen einer einen die Einfüllleitung verschließenden Tankdeckel abdeckenden Tankklappe, zunächst lediglich die Einfüllleitung und anschließend der Kraftstofftank entlüftet wird. Der Tankdeckel des Kraftfahrzeugs, welcher die Einfüllleitung verschließt, wenn kein Kraftstoff in den Kraftstofftank eingefüllt werden soll, wird üblicherweise von der Tankklappe vollständig verdeckt, wenn diese in ihrer Geschlossenposition vorliegt. Vor dem Betätigen des Tankdeckels zum Freigeben der Einfüllleitung muss also zunächst die Tankklappe in ihre Offenposition gebracht werden, insbesondere durch Aufklappen. Die Tankklappe ist beispielsweise mittels eines Push-Push-Mechanismus gehalten, was bedeutet, dass sie auch nach einem Entriegeln der Tankklappe durch eine Entriegelungsvorrichtung in der Geschlossenstellung gehalten ist. Erst nach einem Betätigen der Tankklappe in die von der Offenposition abgewandte Richtung, also beispielsweise einem Hineindrücken der Tankklappe, kann sie in Richtung der Offenposition verlagert werden. Bei einem Verlagern der Tankklappe aus der Offenposition in die Geschlossenposition muss eine Verlagerung der Tankklappe über die Geschlossenposition hinaus durchgeführt werden. Danach ist die Tankklappe wiederum gehalten, auch wenn sie nicht mittels der Verriegelungseinrichtung in der Geschlossenposition verriegelt ist.

Der Tankklappe ist nun ein Sensor zugeordnet, mittels welchem das Öffnen und mithin das Freigeben des Tankdeckels festgestellt wird. Wird das Öffnen beziehungsweise Freigeben erfasst, so wird zunächst lediglich die Einfüllleitung entlüftet. Das Entlüften wird dabei derart durchgeführt, dass es abgeschlossen ist, bis zumindest die Tankklappe oder zusätzlich der Tankdeckel geöffnet ist. Besonders bevorzugt ist das Entlüften beendet, bevor die Tankklappe vollständig geöffnet ist. Anschließend wird der Kraftstofftank entlüftet, wobei es vorgesehen ist, dass ausschließlich der Kraftstofftank oder die Einfüllleitung und der Kraftstofftank gemeinsam entlüftet werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Kraftstofftankanordnung, und
- Figur 2: ein Ablaufdiagramm, in welchem ein Verfahren zum Betreiben der Kraftstofftankanordnung dargestellt ist.

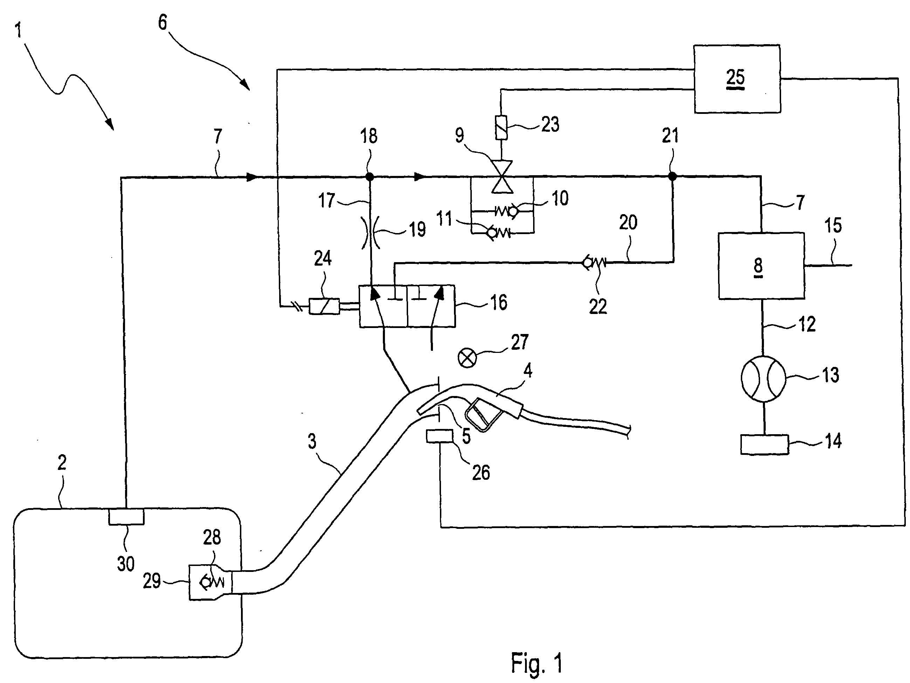

Die Figur 1 zeigt einen Bereich einer Kraftstofftankanordnung 1 für ein Kraftfahrzeug, welches hier nicht näher dargestellt ist. Das Kraftfahrzeug verfügt über eine Brennkraftmaschine, der in einem Kraftstofftank 2 zwischengespeicherter Kraftstoff über eine hier nicht dargestellte Kraftstoffleitung zuführbar ist. Dem Kraftstofftank 2 ist über eine Einfüllleitung 3 Kraftstoff zuführbar, beispielsweise mithilfe einer Zapfpistole 4, die durch eine Einfüllöffnung 5 der Einfüllleitung 3 in letztere einführbar ist. Die Kraftstofftankanordnung 1 weist weiterhin eine Kraftstofftankentlüftungseinrichtung 6 auf, die über eine Tankentlüftungsleitung 7 verfügt. Über die Tankentlüftungsleitung 7 ist eine Strömungsverbindung zwischen dem Kraftstofftank 2 und einer Filtereinrichtung 8 herstellbar. Diese Strömungsverbindung ist über ein in der Tankentlüftungsleitung 7 vorgesehenes Tankentlüftungsventil 9 einstellbar, also beispielsweise entweder freigebbar oder unterbrechbar. Parallel zu dem Tankentlüftungsventil 9 sind zwei Rückschlagventile 10 und 11 geschaltet, die entgegengesetzte Freigaberichtungen aufweisen. Die Filtereinrichtung 8 ist zusätzlich über eine Anschlussleitung 12, die ein Drosselelement 13 aufweisen kann, mit einem Filter 14 verbunden, über den eine Strömungsverbindung zu einer Außenumgebung der Kraftstofftankeinrichtung 1 vorliegt. Zudem ist die Filtereinrichtung 8 über eine Zuführleitung 15 an die Brennkraftmaschine angeschlossen, beispielsweise an ein Saugrohr der Brennkraftmaschine.

Um den Kraftstofftank 2 und die Einfüllleitung 3 sowohl gleichzeitig als auch unabhängig voneinander entlüften zu können, ist ein Mehrwegeventil 16 vorgesehen, über welches die Einfüllleitung 3 strömungstechnisch mit der Tankentlüftungsleitung 7 verbindbar ist. Zu diesem Zweck ist eine erste Verbindungsleitung 17 einerseits an das Mehrwegeventil 16 angeschlossen und mündet andererseits an einer stromaufwärts des Tankentlüftungsventils 9 vorgesehenen Stelle 18 in die Tankentlüftungsleitung 7 ein. In der ersten Verbindungsleitung 17 kann ein Drosselelement 19 vorliegen, welches einen geringeren Durchströmungsquerschnitt aufweist als die umgebenden Bereiche der ersten Verbindungsleitung 17. Weiterhin ist an das Mehrwegeventil 16 eine zweite Verbindungsleitung 20 angeschlossen. Diese mündet auf ihrer dem Mehrwegeventil 16 abgewandten Seite an einer stromabwärts des Tankentlüftungsventils 9 vorgesehenen Stelle 21 in die Tankentlüftungsleitung 7 ein. In der zweiten Verbindungsleitung 20 kann ein Rückschlagventil 22 vorliegen, welches lediglich eine Strömung von dem Mehrwegeventil 16 weg beziehungsweise auf die Tankentlüftungsleitung 7 zu zulässt. Die zweite Verbindungsleitung 20 mündet stromaufwärts der Filtereinrichtung 8 in die Tankentlüftungsleitung 7 ein, dient also der Zusammenführung der Strömungen durch das Tankentlüftungsventil 9 und das Mehrwegeventil 16. Diese werden gemeinsam der Filtereinrichtung 8 zugeführt. Anstelle des Mehrwegeventils 16 können selbstverständlich mehrere separate Ventile vorgesehen sein.

Das Tankenttüftungsventil 9 wird mittels einer Stelleinrichtung 23 und das Mehrwegeventil 16 mittels einer Stelleinrichtung 24 von einem Steuergerät 25, beispielsweise einem Motorsteuergerät der Brennkraftmaschine, angesteuert. Diesem Steuergerät 25 wird als Eingangsgröße ein Signal eines Sensors 26 zugeführt, der den Zustand einer hier nicht dargestellten Tankklappe überwacht. Diese Tankklappe überdeckt einen Tankdeckel, mit welchem die Einfüllöffnung 5 der Einfüllleitung 3 verschließbar ist, wenn der Kraftstofftank 2 nicht mit Kraftstoff befüllt werden soll. Im Bereich der Einfüllöffnung 5 ist eine Einfüllsignalvorrichtung 27, beispielsweise in Form einer Leuchte, vorgesehen.

Um ein vollständig unabhängiges Entlüften der Einfüllleitung 3 von dem Kraftstofftank 2 zu ermöglichen, ist ein Sperrventil 28 vorgesehen, das strömungstechnisch zwischen dem Kraftstofftank 2 und der Einfüllleitung 3 vorliegt. Besonders bevorzugt liegt es an oder zumindest im Bereich einer Mündung 29 der Einfüllleitung 3 in den Kraftstofftank 2 vor. Das Sperrventil 28 ist beispielsweise als Rückschlagventil ausgeführt, wobei es eine Strömung aus dem Kraftstofftank 2 in die Einführleitung 3 verhindert. Es öffnet also lediglich, wenn der Druck in der Einfüllleitung 3 höher ist als der Druck in dem Kraftstofftank 2. Ansonsten trennt es die Einfüllleitung 3 strömungstechnisch von dem Kraftstofftank 2, insbesondere durch Verschließen der Mündung 29. Zwischen dem Kraftstofftank 2 und der Tankentlüftungsleitung 7 kann ein weiteres Ventil 30 vorgesehen sein, welches verhindert, dass flüssiger Kraftstoff aus dem Kraftstofftank 2 in die Tankentlüftungsleitung 7 gelangt.

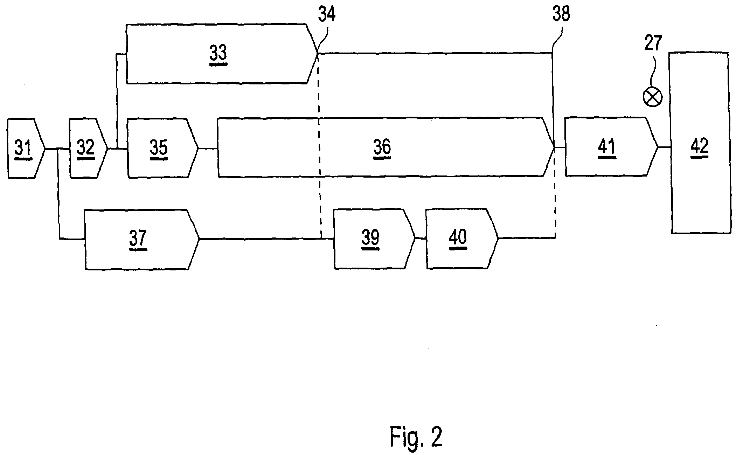

Das Verfahren zum Betreiben der Kraftstofftankanordnung 1 wird nun anhand des in der Figur 2 gezeigten Ablaufdiagramms dargestellt, wobei die einzelnen Schritte über der Zeit von links nach rechts aufgetragen sind. Wird zu einem Zeitpunkt 31 festgestellt, dass die Tankklappe durch einen Fahrer des Kraftfahrzeugs geöffnet wird beziehungsweise geöffnet werden soll, so werden in einem Schritt 32 verschiedene Sicherheitsmaßnahmen durchlaufen, um festzustellen, ob das Betanken beziehungsweise ein Entlüften der Kraftstofftankanordnung 1 mittels der Kraftstofftankentlüftungseinrichtung 6 zulässig ist. Ist dies der Fall, so wird in einem Schritt 33 mittels der Kraftstofftankentlüftungseinrichtung 6 ausschließlich die Einfüllleitung 3 entlüftet, indem das Mehrwegeventil 16 derart eingestellt wird, dass eine Strömungsverbindung von der Einfüllleitung 3 zu der Tankentlüftungsleitung 7 über die zweite Verbindungsleitung 20 vorliegt. Die Strömungsverbindung über die erste Verbindungsleitung 17 ist dagegen vollständig unterbrochen. Das Tankentlüftungsventil 9 bleibt geschlossen, sodass die Strömungsverbindung durch die Tankentlüftungsleitung 7 von dem Kraftstofftank 2 in die Außenumgebung unterbrochen ist. Der Kraftstofftank 2 wird also zunächst nicht entlüftet. Zu einem Zeitpunkt 34 ist das Entlüften der Einfüllleitung 3 vollständig erfolgt. Parallel zu dem Schritt 33 wird in einem Schritt 35 eine bestimmte Wartezeit abgewartet und anschließend in einem Schritt 36 der Kraftstofftank 2 entlüftet. Der Schritt 36 kann dabei vollständig, teilweise oder überhaupt nicht zeitgleich, also nachfolgend, zu dem Schritt 33 ablaufen. Er beginnt jedoch stets zeitverzögert. Zeitgleich mit dem Beginn des Schritts 32 oder anschließend wird in einem Schritt 37 die Tankklappe geöffnet oder dies zumindest dem Fahrer ermöglicht.

Zum Zeitpunkt 34 ist die Einfüllleitung 3 vollständig entlüftet, während der Kraftstofftank 2 noch entlüftet wird. Das Entlüften des Kraftstofftanks 2 ist erst zu einem späteren Zeitpunkt 38 abgeschlossen. An diesem beträgt der Tankinnendruck vorzugsweise weniger als 25 mbar. Spätestens zum Zeitpunkt 34 ist erwartungsgemäß die Tankklappe vollständig geöffnet, sodass der Fahrer mit dem Betätigen des Tankdecks in einem Schritt 39 beginnt. Hat er den Tankdeckel zum Freigeben der Einfüllleitung 3 betätigt, kann der die Zapfpistole 4 in die Einfüllleitung 3 in einem Schritt 40 einführen.

In einem Schritt 41, welcher nach dem Zeitpunkt 38 durchgeführt wird, wird bevorzugt das Mehrwegeventil 16 in eine Stellung gebracht, in welcher die Strömungsverbindung, von der Einfüllleitung 3 in die Tankentlüftungsleitung 7 ausschließlich über die erste Verbindungsleitung 17, nicht jedoch über die zweite Verbindungsleitung 20 vorliegt. Entsprechend ist nun ein gleichzeitiges Entlüften von Kraftstofftank 2 und Einfüllleitung 3 über das Tankentlüftungsventil 9 vorgesehen. Somit liegt nun eine ORVR-Stellung (ORVR: Onboard Refueling Vapor Recovery) vor. Nach dem Schritt 41 wird dem Fahrer mithilfe der Einfüllsignalvorrichtung 27 angezeigt, dass er nun das Einfüllen des Kraftstoffs in den Kraftstofftank 2 in einem Schritt 42 vornehmen kann.

Durch das Entlüften der Einfüllleitung 3 vor dem Kraftstofftank 2 wird insgesamt erreicht, dass der Fahrer bereits zahlreiche Vorbereitungen für das Einfüllen des Kraftstoffs in den Kraftstofftank 2, nämlich insbesondere das Öffnen der Tankklappe (Schritt 37), das Öffnen des Tankdeckels (Schritt 39) und das Einführen der Zapfpistole 4 in die Einfüllleitung 3 (Schritt 40) vornehmen kann. Die darauffolgende Wartezeit bis zur Freigabe des Einfüllens, also die entsprechende Anzeige durch die Einfüllsignalvorrichtung 27, ist deutlich geringer als bei aus dem Stand der Technik bekannten Kraftstofftankanordnungen. Mit Vorteil kann hierzu vorgesehen sein, dass der Tankdeckel einen Drehverschluss aufweist, der erst nach Durchführen einer Drehbewegung des Tankdeckels um mehr als 360° dessen Entfernen von der Einfüllleitung 3 beziehungsweise der Einfüllöffnung 5 zulässt.

### BEZUGSZEICHENLISTE

- 1: Kraftstofftankanordnung
- 2: Kraftstofftank
- 3: Einfüllleitung
- 4: Zapfpistole
- 5: Einfüllöffnung
- 6: Kraftstofftankentlüftungseinrichtung
- 7: Tankentlüftungseinrichtung
- 8: Filtereinrichtung
- 9: Tankentlüftungsventil
- 10: Rückschlagventil
- 11: Rückschlagventil
- 12: Anschlussleitung
- 13: Drosselelement
- 14: Filter
- 15: Zuführleitung
- 16: Mehrwegeventil
- 17: 1. Verbindungsleitung
- 18: Stelle
- 19: Drosselelement
- 20: 2. Verbindungsleitung
- 21: Stelle
- 22: Rückschlagventil
- 23: Stelleinrichtung
- 24: Stelleinrichtung
- 25: Steuergerät
- 26: Sensor
- 27: Einfüllsignalvorrichtung
- 28: Sperrventil
- 29: Mündung
- 30: Ventil
- 31: Zeitpunkt
- 32: Schritt
- 33: Schritt
- 34: Zeitpunkt
- 35: Schritt
- 36: Schritt
- 37: Schritt
- 38: Zeitpunkt
- 39: Schritt
- 40: Schritt
- 41: Schritt
- 42: Schritt

## Patentansprüche

1. Kraftstofftankanordnung (1) für ein Kraftfahrzeug, mit einem Kraftstofftank (2), mit einer an dem Kraftstofftank (2) angeschlossenen Einfüllleitung (3) und mit einer Kraftstofftankentlüftungseinrichtung (6), die eine an dem Kraftstofftank (2) angeschlossene Tankentlüftungsleitung (7) mit einem Tankentlüftungsventil (9) aufweist, **dadurch gekennzeichnet, dass** die Kraftstofftankentlüftungseinrichtung (6) sowohl zur unabhängigen als auch zur gleichzeitigen Entlüftung des Kraftstofftanks (2) und der Einfüllleitung (3) vorgesehen ist.

2. Kraftstofftankanordnung nach Anspruch 1, **dadurch gekennzeichnet, dass** die Einfüllleitung (3) über wenigstens ein Ventil, insbesondere ein Mehrwegeventil (16), sowohl stromaufwärts als auch stromabwärts des Tankentlüftungsventils (9) strömungstechnisch mit der Tankentlüftungsleitung (7) verbindbar ist.

3. Kraftstofftankanordnung nach einem der vorhergehenden Ansprüche, **dadurch gekennzeichnet, dass** in einer ersten Verbindungsleitung (17), die an das Ventil, insbesondere das Mehrwegeventil (16), angeschlossen ist und stromaufwärts des Tankentlüftungsventils (9) in die Tankentlüftungsleitung (7) einmündet, ein Drosselelement (13) vorgesehen ist.

4. Kraftstofftankanordnung nach einem der vorhergehenden Ansprüche, **dadurch gekennzeichnet, dass** in einer zweiten Verbindungsleitung (20), die an das Ventil, insbesondere das Mehrwegeventil (16), angeschlossen ist und stromabwärts des Tankentlüftungsventil (9) mit der Tankentlüftungsleitung (7) zusammengeführt ist, insbesondere in diese einmündet, ein Rückschlagventil (22) vorgesehen ist, das nur eine von dem Ventil fort gerichtete Strömung zulässt.

5. Kraftstofftankanordnung nach einem der vorhergehenden Ansprüche, **dadurch gekennzeichnet, dass** die Tankentlüftungsleitung (7) stromabwärts des Tankentlüftungsventils (9) in eine Filtereinrichtung (8), insbesondere eine Aktivkohlefiltereinrichtung, einmündet.

6. Kraftstofftankanordnung nach einem der vorhergehenden Ansprüche, **dadurch gekennzeichnet, dass** strömungstechnisch zwischen dem Kraftstofftank (2) und der Einfüllleitung (3), insbesondere an einer Mündungsstelle (29) der Einfüllleitung (3) in den Kraftstofftank (2), ein Sperrventil (28) vorgesehen ist.

7. Kraftstofftankanordnung nach einem der vorhergehenden Ansprüche, **dadurch gekennzeichnet, dass** die Einfüllleitung (3) auf ihrer dem Kraftstofftank (2) abgewandten Seite mit einem Tankdeckel verschließbar ist, der einen Drehverschluss aufweist, der eine Freigabe der Einfüllleitung (3) nur bei, einer Drehbewegung des Tankdeckels um mehr als 360° zulässt.

8. Kraftfahrzeug, **gekennzeichnet durch** eine Kraftstofftankanordnung (1) nach einem oder mehreren der vorhergehenden Ansprüche.

9. Verfahren zum Betreiben einer Kraftstofftankanordnung (1) für ein Kraftfahrzeug, nach einem oder mehreren der vorhergehenden Ansprüche, wobei die Kraftstofftankanordnung (1) über einen Kraftstofftank (2), eine an den Kraftstofftank (2) angeschlossene Einführleitung (3) und eine Kraftstofftankentlüftungseinrichtung (6) verfügt, die eine an den Kraftstofftank (2) angeschlossene Tankentlüftungsleitung (7) mit einem Tankentlüftungsventil (9) aufweist, **dadurch gekennzeichnet, dass** die Kraftstofftankentlüftungseinrichtung (6) sowohl zur unabhängigen als auch zur gleichzeitigen Entlüftung des Kraftstofftanks (2) und der Einfüllleitung (3) verwendet wird.

10. Verfahren nach Anspruch 9, **dadurch gekennzeichnet, dass** vor einem Befüllen des Kraftstofftanks (2) durch die Einfüllleitung (3), insbesondere nach einem Öffnen einer einen die Einfüllleitung verschließenden Tankdeckel abdeckenden Tankklappe, zunächst lediglich die Einfüllleitung (3) und anschließend der Kraftstofftank (2) entlüftet wird.

## Claims

1. Fuel tank arrangement (1) for a motor vehicle, comprising a fuel tank (2), having a filling pipe (3) connected to the fuel tank (2) and a fuel tank venting unit (6) which comprises a tank venting pipe (7) connected to the fuel tank (2) and having a fuel tank venting valve (9), **characterised in that** the fuel tank venting unit (6) is provided both for the independent and for the simultaneous venting of the fuel tank (2) and the filling pipe (3).

2. Fuel tank arrangement according to claim 1, **characterised in that** the filling pipe (3) can be connected fluidically to the tank venting pipe (7) via at least one valve, in particular a multi-port valve (16), both upstream and downstream of the fuel tank venting valve (9).

3. Fuel tank arrangement according to any of the preceding claims, **characterised in that** a throttle element (13) is provided in a first connection pipe (17) which is connected to the valve, in particular the multi-port valve (16), and opens into the tank venting pipe (7) upstream of the tank venting valve (9).

4. Fuel tank arrangement according to any of the preceding claims, **characterised in that** in a second connection pipe (20) which is connected to the valve, in particular the multi-port valve (16), and which downstream of the tank venting valve (9) joins with the tank venting pipe (7), in particular which opens into the latter, a check valve (22) is provided which only admits an outward directed flow from the valve.

5. Fuel tank arrangement according to any of the preceding claims, **characterised in that** the tank venting pipe (7) opens downstream of the tank venting valve (9) into a filter device (8), in particular an active carbon filter device.

6. Fuel tank arrangement according to any of the preceding claims, **characterised in that** a shut-off valve (28) is provided fluidically between the fuel tank (2) and the filling pipe (3), in particular at an opening point (29) of the filling pipe (3) into the fuel tank (2).

7. Fuel tank arrangement according to any of the preceding claims, **characterised in that** the filling pipe (3) can be locked on the side thereof facing away from the fuel tank (2) using a tank cap having a rotary lock which permits a release of the filling pipe (3) only on a rotary movement of the tank cap through more than 360°.

8. Motor vehicle, **characterised by** a fuel tank arrangement (1) according to one or more of the preceding claims.

9. Method for operating a motor vehicle fuel tank arrangement (1) according to one or more of the preceding claims, wherein the fuel tank arrangement (1) has a fuel tank (2), an entry pipe (3) connected to the fuel tank (2) and a fuel tank venting unit (6) comprising a tank venting pipe (7) connected to the fuel tank (2) and having a tank venting valve (9), **characterised in that** the fuel tank venting unit (6) is used both for the independent and for the simultaneous venting of the fuel tank (2) and the filling pipe (3).

10. Method according to Claim 9, **characterised in that** before filling the fuel tank (2) through the filling pipe (3), in particular after opening of a filling pipe locking tank flap covering the tank cap, initially only the filling pipe (3) and then the fuel tank (2) is vented.

## Revendications

1. Ensemble de réservoir de carburant (1) pour un véhicule automobile, comprenant un réservoir de carburant (2), une conduite de remplissage (3) raccordée au réservoir de carburant (2) et un dispositif de purge d'air (6) pour le réservoir de carburant, qui présente une conduite de purge d'air du réservoir (7) raccordée au réservoir de carburant (2) avec une soupape de purge d'air du réservoir (9), **caractérisé en ce que** le dispositif de purge d'air (6) du réservoir de carburant est prévu autant pour la purge d'air indépendante que pour la purge d'air simultanée du réservoir de carburant (2) et de la conduite de remplissage (3).

2. Ensemble de réservoir de carburant selon la revendication 1, **caractérisé en ce que** la conduite de remplissage (3) peut être raccordée, via au moins une soupape, en particulier une soupape à voies multiples (16), autant en amont qu'en aval de la soupape de purge d'air (9) du réservoir, avec la conduite de purge d'air (7) du réservoir en mode de technique des fluides.

3. Ensemble de réservoir de carburant selon l'une quelconque des revendications précédentes, **caractérisé en ce que**, dans une première conduite de liaison (17), qui est raccordée à la soupape, en particulier à la soupape à voies multiples (16) et débouche en amont de la soupape de purge (9) du réservoir dans la conduite de purge d'air (7) du réservoir, il est prévu un élément d'étranglement (13).

4. Ensemble de réservoir de carburant selon l'une quelconque des revendications précédentes, **caractérisé en ce que**, dans une seconde conduite de liaison (20), qui est raccordée à la soupape, en particulier à la soupape à voies multiples (16) et est assemblée, en aval de la soupape de purge d'air (9) du réservoir, avec la conduite de purge d'air (7) du réservoir, en particulier débouche dans celle-ci, il est prévu une soupape antiretour (22) qui ne permet qu'un écoulement dirigé en avant par la soupape.

5. Ensemble de réservoir de carburant selon l'une quelconque des revendications précédentes, **caractérisé en ce que** la conduite de purge d'air (7) du réservoir débouche en aval de la soupape de purge d'air (9) du réservoir dans un dispositif de filtration (8), en particulier un dispositif de filtration à charbon actif.

6. Ensemble de réservoir de carburant selon l'une quelconque des revendications précédentes, **caractérisé en ce que**, en mode de technique des fluides, il est prévu un clapet antiretour (28) entre le réservoir de carburant (2) et la conduite de remplissage (3), en particulier en un point (29) de la conduite de remplissage (3) débouchant dans le réservoir de carburant (2).

7. Ensemble de réservoir de carburant selon l'une quelconque des revendications précédentes, **caractérisé en ce que** la conduite de remplissage (3) peut être fermée, sur son côté opposé au réservoir de carburant (2), par un bouchon de réservoir qui présente un verrouillage demi-tour qui permet de libérer la conduite de remplissage (3) uniquement dans le cas d'un mouvement de rotation du bouchon de réservoir de plus de 360°.

8. Véhicule automobile, **caractérisé par** un ensemble de réservoir de carburant (1) selon une ou plus des revendications précédentes.

9. Procédé de fonctionnement d'un ensemble de réservoir de carburant (1) pour un véhicule automobile selon une ou plus des revendications précédentes, dans lequel l'ensemble de réservoir de carburant (1) dispose d'un réservoir de carburant (2), d'une conduite de remplissage (3) raccordée au réservoir de carburant (2) et d'un dispositif de purge d'air (6) du réservoir de carburant, qui présente une conduite de purge d'air (7) du réservoir raccordée au réservoir de carburant (2) avec une soupape de purge d'air du réservoir (9), **caractérisé en ce que** le dispositif de purge d'air (6) du réservoir de carburant est utilisé autant pour la purge d'air indépendante que pour la purge d'air simultanée du réservoir de carburant (2) et de la conduite de remplissage (3).

10. Procédé selon la revendication 9, **caractérisé en ce que**, avant remplissage du réservoir de carburant (2) par la conduite de remplissage (3), en particulier après l'ouverture d'un clapet de réservoir recouvrant un bouchon de réservoir fermant la conduite de remplissage, tout d'abord la conduite de remplissage (3) seulement et ensuite le réservoir de carburant (2) sont purgés.
